# NEUE EUROPÄISCHE PATENTSCHRIFT

(11) **EP 0 539 562 B2**
(45) Veröffentlichungstag und Bekanntmachung des Hinweises auf die Entscheidung über den Einspruch: **12.11.2003**
(45) Hinweis auf die Patenterteilung: 25.03.1998
(21) Anmeldenummer: 92911393.4
(22) Anmeldetag: 18.05.1992
(51) Int. Cl.: B65H 75/50, B65H 75/14

(54) **HERSTELLUNGSVEFAHREN FÜR EINEN SPULENKÖRPER FÜR FADENFÖRMIGES WICKELGUT**
PROCESS FOR PRODUCING A SPOOL FOR WINDING FIBROUS MATERIALS
PROCEDE DE FABRICATION D'UNE BOBINE D'ENROULEMENT DE MATIERES FIBREUSES

(30) Priorität: 17.05.1991 DE 4116139
(43) Veröffentlichungstag der Anmeldung: 05.05.1993
(73) Patentinhaber: HILDEBRANDT-SPULEN-BOBBINS GmbH, D-86825 Bad Wörishofen (DE)
(72) Erfinder: HILDEBRANDT, Dieter, D-8939 Bad Wörishofen (DE); PRECHTEL, Michael, D-8000 München 71 (DE)
(74) Vertreter: Vollnhals, Aurel, Dipl.-Ing.
(86) Internationale Anmeldenummer: EP9201088
(87) Internationale Veröffentlichungsnummer: WO92020603

(56) Entgegenhaltungen:
- DE-C- 3 908 223
- FR-A- 1 130 583
- PATENT ABSTRACTS OF JAPAN, Band 13, Nr. 545 (M-902), 06. Dezember 1989 & JP,A,01 224 185 ( T.FUNABIKI ) 7. September 1989
- PATENT ABSTRACTS OF JAPAN vol. 6, no. 1 (M-105)7. Januar 1982 & JP,A,56 126 138 ( TOKUDEN KK ) 2. Oktober 1981

## Beschreibung

Die Erfindung betrifft ein Verfahren zum Herstellen eines Spulenkörpers für fadenförmiges Wickelgut.

Aus der DE 39 08 223 C2 ist ein Spulenkörper für fadenförmiges Wickelgut bekannt, wobei die beiden symmetrisch geteilten Spulenkörperhälften aus Leichtmetallegierung an ihren mittleren stumpf aneinandergesetzten Kernrohrenden durch eine Reibschweißnaht fest miteinander verbunden sind. Die Spulenkörperhälften sind hierbei durch Fließpressen hergestellt, wozu jedoch relativ aufwendige Fließpreß-Werkzeuge erforderlich sind. Zudem benötigt die Herstellung der Fließpreß-Werkzeuge relativ lange Zeit und verursacht hohe Vorlaufkosten. Zudem sind der Gestaltung des Spulenkörpers durch das Fließpreßverfahren bestimmte geometrische Grenzen gesetzt. So ist beispielsweise die Herstellung der Spulenflansche ab einem bestimmten Durchmesser, z.B. >100 mm problematisch, da die Wandstärke der Spulenflansche gegenüber dem relativ großen Durchmesser sehr gering ist.

Weiterhin ist die Lagerhaltung der als Fließpreßteile hergestellten Spulenkörperhälften relativ aufwendig, da diese ziemlich schlecht stapelbar sind und viel Platz beanspruchen. Zudem verursachen bereits geringfügige Änderungen in der Spulenkörpergestaltung, z.B. eine verringerte axiale Länge, sehr aufwendige Änderungen am Fließpreß-Werkzeug, so daß dieses Verfahren aufgrund der hohen Werkzeugkosten im wesentlichen nur für große Stückzahlen wirtschaftlich ist. Für kleinere Stückzahlen und eine flexible Fertigung ist dieses Verfahren jedoch kaum geeignet.

Entsprechendes gilt auch für den Spulenkörper der DE-OS 16 02 319, dessen Spulenkörperhälften als Gußteile ausgebildet sind, die dann durch Inertgas-Verschweißen miteinander verbunden werden. Auch hier sind relativ hohe Vorlaufkosten für die Gußformen erforderlich, die einer wirtschaftlichen Fertigung für geringe Losgrößen entgegensteht.

Aus der FR-A-11 30 583 ist weiterhin ein Spulenkörper aus Leichtmetall bekannt, bei dem ein Kernrohr in zwei Spulenflansche vollständig eingesteckt wird und dann am Außenumfang verlötet wird. Eine homogene Verbindung ist hierbei jedoch nicht erreichbar, so daß es im Eckbereich aufgrund der hohen axialen Belastungen der Spulenflansche beim Aufwickeln zu Brüchen an der Verbindungsnaht kommen kann. Zudem müssen die Innendurchmesser der Spulenflansche und die Außendurchmesser des Kernrohres im Zusammensteckbereich sehr genau gefertigt werden, was ansonsten zu Schwächungen der Verbindungsnaht führen würde.

Aus der GB-A-825 540 ist außerdem ein dreiteiliger Spulenkörper bekannt, der aus Blechpreßteilen geformt und dann am Außenümfang des Kernrohres zusammengeschweißt ist. Auch hierbei ist eine gleichmäßige Durchschweißung der Naht kaum zu erreichen, so daß die Festigkeit gering ist.

Die JP-A-1 224 185 beschreibt einen Spulenkörper für fadenförmiges Wickelgut gemäß den oberbegrifflichen Merkmalen des Patentanspruches 1. Der Spulenflansch weist hierbei in Richtung zum Kernrohr einen erheblichen Vorsprung auf, so daß nach der Reibschweißverbindung die Reibschweißwulst im Bereich des Kernrohres mit Abstand vom Spulenflansch angeordnet ist. Da die Spulenflansche in einfacher Weise zur Senkung der Produktionskosten als Blech- oder Stangen-Drehteil ausgebildet sind, ergibt sich bei dieser Anordnung der Reibschweißverbindung jedoch im Spulenflansch selbst aufgrund der Biegebelastung beim Aufwickeln von fadenförmigen Wickelgut eine bruchgefährdete Zone, so daß die erreichbare Festigkeit begrenzt ist.

Demzufolge liegt der Erfindung die Aufgabe zugrunde, ein Herstellungsverfahren für einen Spulenkörper für fadenförmiges Wickelgut zu schaffen, der auch für geringe Stückzahlen einfach und kostengünstig ist, sowie eine besonders hohe Festigkeit des Spulenkörpers bedingt.

Diese Aufgabe wird gelöst durch ein Verfahren mit den Merkmalen des Patentanspruchs 1.

Bei dem Herstellungsverfahren gemäß Anspruch 1 ist insbesondere von Vorteil, daß hierdurch in einfachster Weise Sonderanfertigungen der Spulenkörper mit nahezu beliebigen Abmessungen hergestellt werden können, insbesondere, wenn das den einen Spulenflansch und das Kernrohr umfassende Schmiede- oder Fließpreßteil vor dem Reibschweißen mit dem zweiten, scheibenförmigen Spulenflansch auf das gewünschte Fertigmaß (axiale Länge) des Spulenkörpers abgelängt wird.

Weitere vorteilhafte Ausgestaltungen sind Gegenstand der Unteransprüche.

Durch die mehrteilige Ausbildung des Spulenkörpers lassen sich die Einzelteile, insbesondere die kreisringförmigen Spulenflansche mit beliebigern Durchmesser, insbesondere durch spanende Bearbeitung, relativ leicht herstellen. Im einfachsten Fall ist der Spulenkörper aus einem Kernrohr und zwei Spulenflanschen zusammengesetzt, die auf der Drehmaschine von entsprechenden Halbzeugen, nämlich Rohren durch Abstechen oder Abtrennen hergestellt sind. Damit lassen sich Änderungen in der Geometrie des Spulenkörpers, beispielsweise ein verlängertes Kernrohr, durch einfache Eingaben an der Drehmaschine durchführen. Änderungen an Werkzeugen oder Gußformen sind somit nicht mehr erforderlich.

Zudem reduziert sich damit die Lagerhaltung entscheidend, da weder Werkzeuge noch verschiedene Ausgangsmaterialien vorrätig gehalten werden müssen. Vielmehr können durch eine sehr geringe Zahl von Halbzeugen, z.B. für das Kernrohr und die Spulenflansche jeweils gezogene Rohre, eine Vielzahl von unterschiedlich gestalteten Spulenkörpern eingesetzt werden. Damit verringern sich die Vorlaufkosten wesentlich, ebenso wie die Lieferzeit für Sonderanfertigungen von Spuienkörpern.

Von wesentlicher Bedeutung ist die Anordnung der Reibschweißnaht im Eck- oder Übergangsbereich zwischen dem stirnseitigen Kernrohrende und der zum Kernrohr zugewandten Innenseite des Spulenflansches, da hierdurch gerade im hochbelasteten Eckbereich eine zuverlässige Durchschweißung der Verbindungsnaht erreicht wird. Zudem wird beirn Reibschweißen das erwärmte Material gestaucht und dadurch verdichtet, so daß sich ein weitgehend homogener Faserverlauf ähnlich wie beim Schmieden oder Fließpressen ergibt, was die Festigkeit des Spulenkörpers entscheidend erhöht.

Von besonderer Bedeutung ist der an den Spulenflanschen zum Kernrohrende hin vorgesehene Bund, da hierdurch beim Reibschweißen die Reibzone begrenzt wird, wobei der Bund dann gestaucht wird und an dessen Stelle die Reibschweißnaht entsteht. Hierdurch fließt zum einen relativ wenig Wärme über die Spulenflansche ab, so daß sich ein minimierter Wärmeverlust an der Schweißstelle ergibt. Zum anderen wird damit erreicht, daß in dem Eckbereich zwischen Kernrohrende und Spulenflansch-Innenseite die äußere Reibschweißwulst angesiedelt ist, so daß sich hierdurch eine Materialanhäufung ergibt, die beim anschließenden Fertigbearbeiten als übergangsradius genutzt werden kann.

Hierdurch wird sichergestellt, daß sich am Übergangsbereich des Kernrohres zu den Spulenflanschen keine Spalten bilden können, in die sich das Wickelgut einklemmen könnte.

Nachstehend wird die Erfindung anhand eines in der Zeichnung dargestellten Ausführungsbeispieles beschrieben und erläutert. Es zeigen:
- Fig. 1: eine Seitenansicht des nach dem erfindungsgemäße Verfahren hergestellten Spulenkörpers mit Teilschnitt;
- Fig. 2A und 2B: je eine vergrößerte Darstellung des Eckbereichs des Spulenkörpers in aneinandergesetzter und in zusammengeschweißter Position; und
- Fig. 3: eine schematische Darstellung des Faserverlaufs eines nach dem erfindungsgemäße Verfahren hergestellten Spulenkörpers im Halbschnitt.

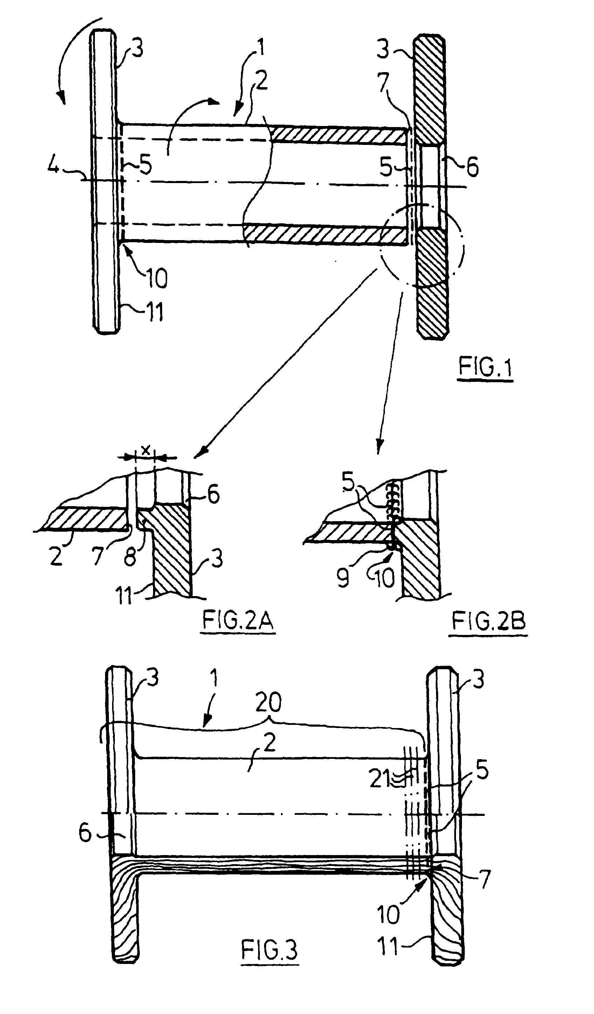

In Fig. 1 ist ein nach dem erfindungsgemäße Verfahren hergestellten Spulenkörper 1 dargestellt, der im wesentlichen aus einem Kernrohr 2 und zwei endseitigen Spulenflanschen 3 besteht, die rotationssymmetrisch um die Achse 4 des Spulenkörpers 1 ausgebildet sind. Die beiden Spulenflansche 3 sind als kreisringförmige Scheiben ausgebildet, die in ihrem Zentrum Lagersitze 6 zur Befestigung an der Wickelmaschine oder Textilmaschine aufweisen. Die Spulenflansche 3 sind hier mittels je einer Reibschweißnaht 5 an die beiden stirnseitigen Kernrohrenden 7 angesetzt. Beim Reibschweißen werden das Kernrohr 2 und der Spulenflansch 3 gegeneinander verdreht, wie dies durch die beiden gegenläufigen Pfeile in der linken Hälfte dargestellt ist und aneinander angepreßt. In der rechten Hälfte ist der Spulenkörper 1 im Teilschnitt dargestellt, wobei der Spulenflansch 3 in der Position gezeigt ist, wie er kurz vor dem Reibschweißen positioniert ist, um anschließend die ringförmige als Strichlinie dargestellte Reibschweißnaht 5 zu bilden. Der Eck- oder übergangsbereich vom Kernrohr 2 auf den Spulenflansch 3 ist in den nachfolgenden Figuren vergrößert dargestellt.

In Fig. 2A ist der Eckbereich 10 vergrößert dargestellt. Der Spulenflansch 3 weist hierbei einen erhabenen Bund B auf, der der Wandstärke des Kernrohres 2 etwa entspricht und etwa eine axiale Länge x aufweist, die ebenfalls der Wandstärke des Kernrohres 2 entspricht. Da die Wandstärke des Kernrohres 2 im allgemeinen nur einige Millimeter beträgt, ist auch der Bund 8 gegenüber der Innenseite 11 des Spulenflansches 3 nur um einige Millimeter erhöht. Die axiale Länge x des Bundes B beträgt somit im allgemeinen 2 bis 5 mm. Dieser Bund B dient im wesentlichen dazu, daß die Wärmeeinleitung in den Spulenflansch 3 während des Reibschweißvorganges gegenüber der bündigen Ausführung in Fig. 1 unterbleibt, so daß der Wärmeverlust an der Schweißstelle minimiert wird. Durch diese begrenzte Wärmeableitung aufgrund des Bundes B sind zudem geringere Anpreßkräfte beim Reibschweißen erforderlich. Zudem wird durch den nur wenige Millimeter hohen Bund 8 erreicht, daß die Reibschweißnaht 5, insbesondere die äußere sich ausbildende Reibschweißwulst 9, exakt in dem Eckbereich 10 zwischen Kernrohr 2 und Spulenflansch 3 zu liegen kommt und dort aufgrund der Materialstauchung eine Materialanhäufung bildet.

Diese Ausbildung nach dem Reibschweißen ist in Fig. 2B gezeigt. Wie ersichtlich, kann dann der Eckbereich 10 beim Überdrehen der Reibschweißnaht 5 mit einem Radius ausgebildet werden.

Zum Herstellen des vorstehend beschriebenen Spulenkörpers aus Leichtmetall werden zunächst die beiden Spulenflansche 3 und das Kernrohr 2 bevorzugt aus Rohrmaterial durch eine Drehbearbeitung, insbesondere Abstechen und ggf. Anformen des Bundes 8 hergestellt. Anschließend werden diese Teile reibgeschweißt, wobei in bevorzugter Ausführung die beiden Spulenflansche 3 in einem Arbeitsgang gleichzeitig reibgeschweißt werden. Hierzu kann beispielsweise das Kernrohr 2 angetrieben werden und die beiden Spulenflansche 3 in einfachster Ausführung auf das rotierende Kernrohr 2 aufgepreßt werden. Es können jedoch auch die Spulenflansche 3 rotierend angetrieben werden, während das Kernrohr 2 stillsteht bzw. gegenläufig rotiert. Nach dem Reibschweißen ist es im allgemeinen nur noch erforderlich, mit minimalen Spanmengen, insbesondere im Eckbereich, die Reibschweißwulst 9 zu beseitigen. Die innere Reibschweißwulst im Bereich der Lagersitze 6 kann zugleich mit der Lagerbearbeitung beseitigt werden, wobei auch vorteilhaft ist, daß die innere Reibschweißwulst gegenüber der mittigen Ausführung bei der DE 39 08 225 C2 besser zugänglich ist und genauer kontrolliert werden kann. Hierdurch ist eine bessere Überprüfung der Schweißnaht und damit eine bessere Qualitätskontrolle möglich. Der reibgeschweißte Spulenkörper 1 wird bevorzugt vor dem Fertigbearbeiten noch auf höhere Festigkeit ausgehärtet. Als Werkstoff eignen sich insbesondere AlMn-Legierungen.

In Fig. 3 ist eine nach einer besonders worteilhaften Ausführungsform des erfindungsgemäßen Verfahrens hergestellter Verfahrens Spulenkörper 1 dargestellt. Hierbei ist der hier linke Spulenflansch 3 zusammen mit dem gesamten Kernrohr 2 als einteiliges Schmiede- oder Fließpreßteil 20 ausgebildet, an dessen Kernrohrende 7 dann ebenso, wie in Fig. 1 beschrieben, nur noch der rechte Spulenflansch 3 reibgeschweißt wird. Hierin ist im Halbschnitt im unteren Figurenteil der Faserverlauf des Leichtmetalls schematisch dargestellt, wobei der vorwiegend axial gerichtete Faserverlauf der gezogenen, fließgepreßten oder geschmiedeten Einzelteile im Eckbereich 10 durch das Anstauchen des Kernrohrendes 7 verdichtet und in die radiale Richtung umgelenkt wird und hierdurch dieser bruchgefährdete Übergangsbereich verfestigt wird. Damit weist der reibgeschweißte Eckbereich 10 eine ähnlich hohe Festigkeit auf, wie der gegenüberliegende Übergangsbereich am linken Spulenflansch, der durch Schmieden oder Fließpressen ebenfalls mit nichtunterbrochenem und damit hochfestem Faserverlauf hergestellt ist.

Weiterhin ist von Bedeutung, daß das Schmiedeoder Fließpreßteil 20 durch entsprechendes Ablängen z. B. durch Abdrehen, Absägen usw. auf die gewünschte Spulenkörperlänge angepaßt werden kann, wie dies mit mehreren Trennlinien 21 am Kernrohr 2 angedeutet ist. Somit sind nur einige wenige Schmiede- oder Fließpreßformen erforderlich, um eine Vielzahl von unterschiedlichen Spulenkörperlängen herzustellen. Durch die anschließende vorgeschlagene Reibschweißung mit dem scheibenförmigen Spulenflansch 3 läßt sich somit eine einfache, schnelle Herstellung eines hochfesten Spulenkörpers 1 erreichen.

## Patentansprüche

1. Verfahren zum Herstellen eines Spulenkörpers aus Leichtmetall, der aus einem Kernrohr und zwei endseitigen Spulenflanschen gebildet ist, wobei das Verfahren aus folgenden Schritten besteht:
- Herstellung des Kernrohres (2) und eines Spulenflansches (3) als einstückiges Schmiedeoder Fließpreßteil (20);
- Reibschweißen des Kernrohrendes (7) zur Verbindung mit dem zweiten scheibenförmigen Spulenflansch (3) unter Bildung einer Reibschweißwuist (9) genau im Eckbereich (10), wobei an dem Spulenflansch (3) zum Kernrohrende (7) hin ein Bund (8) mit der Kern rohrwandstärke und etwa einer axialen Länge (x), die der Wandstärke des Kernrohres (2) entspricht, angeformt ist; und
- Überdrehen des Spulenkörpers (1) zur Beseitigung der überstehenden Bereiche der Reibschweißwulst (9) und Ausbildung eines Übergangsradius genau im Eckbereich (10).

2. Verfahren nach Anspruch 1, **dadurch gekennzeichnet, daß** der Spulenkörper (1) nach dem Reibschweißen und vor dem Überdrehen warm ausgehärtet wird.

3. Verfahren nach Anspruch 1 oder 2, **dadurch gekennzeichnet, daß** das Schmied- oder Fließpreßteil (20) für eine Vielzahl von verschiedenen Spulenkörperlängen verwendet wird, wobei es für die jeweilige Spulenkörperlänge unter Berücksichtigung der Stauchung beim Reibschweißen am Kernrohrende (7, 17) entsprechend abgelängt wird.

## Claims

1. Method for producing a bobbin of light metal, formed of a core tube and two bobbin end face flanges, said method consists of the following steps:
- producing the core tube (2) and one bobbin flange (3) as a one-piece forge or extrusion part (20);
- frictional welding of the core tube end (7) for connection to the second disk-like bobbin flange (3) by forming a frictional welding bead (9) exactly in the corner region (10), wherein there is formed at the bobbin flange (3) toward the core tube end (7) a rim (8) having the thickness of the core tube wall and approximately an axial length (x) corresponding to the wall thickness of the core tube (2); and
- lathe processing of the bobbin (1) for removing the protruding portions of the frictional welding bead (9) and forming a transition radius exactly in the corner region (10).

2. Method of claim 1, **characterised in that** the bobbin (1) is heat-hardened after frictional welding and prior to lathe processing.

3. Method of claim 1 or 2, **characterised in that** the forge or extrusion part (20) is used for a plurality of different bobbin lengths, said part (20) being correspondingly cut off for the respective bobbin length in consideration of the compression during frictional welding at the core tube end (7, 17).

## Revendications

1. Procédé de fabrication d'un corps de bobine en métal léger, qui est constitué d'un tube de noyau et de deux joues de bobine terminales, le procédé étant constitué des étapes suivantes :
- fabrication du tube de noyau (2) et d'une joue de bobine (3) sous forme de pièce forgée ou fluée (20) d'un seul tenant ;
- soudage par friction de l'extrémité (7) du tube de noyau en vue de l'assemblage avec la deuxième joue de bobine (3) en forme de disque, en formant un cordon de soudure (9) exactement dans la région de coin (10), un collet (8), présentant l'épaisseur de paroi du tube de noyau et une longueur axiale (x) qui correspond approximativement à l'épaisseur de paroi du tube de noyau (2), étant formé sur la joue de bobine (3) en direction de l'extrémité (7) du tube de noyau ; et
- usinage complémentaire par tournage du corps de bobine (1) afin d'éliminer les régions dépassantes du cordon de soudure (9) et de former un rayon de transition exactement dans la région de coin (10).

2. Procédé selon la revendication 1, **caractérisé en ce que** le corps de bobine (1) est durci à chaud après le soudage par friction et avant l'usinage complémentaire par tournage.

3. Procédé selon la revendication 1 ou 2, **caractérisé en ce que** la pièce forgée ou fluée (20) est utilisée pour une pluralité de longueurs différentes de corps de bobine, en étant tronçonnée d'une manière correspondante pour la longueur respective de corps de bobine en tenant compte de l'écrasement lors du soudage par friction à l'extrémité (7, 17) du tube de noyau.
